# EUROPÄISCHE PATENTSCHRIFT

(11) **EP 1 775 449 B1**
(45) Veröffentlichungstag und Bekanntmachung des Hinweises auf die Patenterteilung: **17.06.2009**
(21) Anmeldenummer: 06019727.4
(22) Anmeldetag: 21.09.2006
(51) Int. Cl.: F02D 41/02, B60W 10/04, F16D 27/00

(54) **Antriebsstrang für ein Kraftfahrzeug und Verfahren zum Betreiben eines solchen Antriebsstrangs**
Vehicle drive train and method for operating said drive train
Ligne de transmission pour véhicule et méthode pour l'utilisation d'une telle ligne de transmission

(30) Priorität: 11.10.2005 DE 102005048612
(43) Veröffentlichungstag der Anmeldung: 18.04.2007
(73) Patentinhaber: LuK Lamellen und Kupplungsbau Beteiligungs KG, 77815 Bühl (DE)
(72) Erfinder: Pfund, Thomas, 76547 Leiberstung (DE)

(56) Entgegenhaltungen:
- DE-A1- 10 312 088
- DE-A1- 19 701 671
- US-A- 4 829 221
- US-A- 5 941 923

## Beschreibung

Die Erfindung betrifft ein Verfahren zum Betreiben eines Antriebsstrangs für ein Kraftfahrzeug, wobei mittels einer Brennkraftmaschine in Abhängigkeit von einem bereitgestellten Drehmoment-Sollwertsignal ein Drehmoment erzeugt und über eine Kupplung auf Antriebsräder übertragen wird, wobei mit Hilfe eines Elektromotors eine Schließkraft aufgebracht wird, mit der die Kupplung entgegen einer Rückstellkraft in einer Schließstellung gehalten wird, wobei der Elektromotor derart bestromt wird, dass bei einem hohen Drehmoment eine hoher Strom und bei einem niedrigeren Drehmoment eine kleinerer Strom zur Anwendung kommt. Ferner betrifft die Erfindung einen Antriebsstrang für ein Kraftfahrzeug, mit einer mit einem elektronischen Motorsteuergerät verbundenen Brennkraftmaschine, die über eine Kupplung mit Antriebsrädern in Antriebsverbindung steht, wobei die Kupplung als selbst öffnende Kupplung ausgebildet ist, die mit Hilfe eines einen Elektromotor als Verstellantrieb aufweisenden Kupplungs-Aktors entgegen einer Rückstellkraft aus einer Offenstellung in eine Schließstellung bringbar ist, wobei der Kupplungs-Aktor eine Ansteuereinrichtung für den Elektromotor aufweist, die zum Einstellen der Stellkraft des Kupplungs-Aktors in Abhängigkeit vom Drehmoment der Brennkraftmaschine mit dem Motorsteuergerät verbunden ist, wobei das Motorsteuergerät einen Sollwertsignaleingang für ein Drehmoment-Sollwertsignal und einen Grenzwertsignaleingang für ein Drehmoment-Grenzwertsignal aufweist, und wobei das Motorsteuergerät derart ausgestaltet ist, dass das Drehmoment der Brennkraftmaschine entsprechend dem Drehmoment-Sollwertsignal eingestellt wird, wenn dieses innerhalb eines durch das Drehmoment-Grenzwertsignal vorgegebenen Drehmomentwertebereichs liegt, und dass das Drehmoment der Brennkraftmaschine auf den Drehmomentbereich begrenzt wird, wenn das dem Drehmoment-Sollwertsignal entsprechende Drehmoment außerhalb des Drehmomentwertebereichs liegt.

Ein derartiger Antriebsstrang, der eine Brennkraftmaschine aufweist, die über eine Kupplung und ein Schaltgetriebe die Antriebsräder des Kraftfahrzeugs antreibt, ist aus der Praxis bekannt. Dabei steht die Brennkraftmaschine mit einem Motorsteuergerät in Steuerverbindung, welches das Drehmoment der Brennkraftmaschine entsprechend einem an einem Sollwertsignaleingang des Motorsteuergeräts anliegenden Drehmoment-Sollwertsignal einstellt. Das Drehmoment-Sollwertsignal kann direkt vom Fahrer über ein elektronisches Gaspedal oder von einer elektronischen Fahrstabilisierungseinrichtung vorgegeben werden. Das Schaltgetriebe ist in dem Antriebsstrang zwischen der Kupplung und den Antriebsrädern angeordnet und mit Hilfe einer motorisch angetriebenen Betätigungseinrichtung in seiner Übersetzung verstellbar. Das Schaltgetriebe und die Betätigungseinrichtung stehen mit einem elektronischen Getriebesteuergerät in Antriebsverbindung, das einen Grenzwertsignalausgang aufweist, über den ein Grenzwertsignal an das Motorsteuergerät ausgegeben wird, um während der Schaltvorgänge das Drehmoment der Brennkraftmaschine zu begrenzen. Dadurch können die Schaltvorgänge von den Fahrzeuginsassen weitgehend unbemerkt durchgeführt werden.

Die Kupplung ist als selbst öffnende, nicht selbsthemmende Kupplung ausgebildet, die in Schließstellung mittels eines Kupplungs-Aktors entgegen der Rückstellkraft einer Tellerfeder zugedrückt wird. Der Kupplungs-Aktor hat einen Elektromotor als Antrieb, der bei geschlossener Kupplung ständig bestromt wird, um die erforderliche Schließkraft für die Kupplung aufzubringen. Um die dabei in der der Motorwicklung auftretende thermische Verlustleistung im Mittel möglichst gering zu halten, wird der Wicklungsstrom proportional zum Drehmoment der Brennkraftmaschine eingestellt, d.h. der Wicklungsstrom steigt mit zunehmendem Drehmoment an. Dadurch ergibt sich bei geringer Belastung der Brennkraftmaschine eine entsprechend geringere Erwärmung des Elektromotors. Dieser ist derart dimensioniert, dass bei den in der Praxis normalerweise auftretenden Betriebszuständen eine thermische Überlastung des Elektromotors vermieden wird. Dennoch kann unter ungünstigen Bedingungen, wenn z.B. bei hohen Außentemperaturen eine lange Strecke ununterbrochen mit maximalem Drehmoment der Brennkraftmaschine zurückgelegt wird, die zulässige Betriebstemperatur des Elektromotors vorübergehend überschritten werden. Durch diese thermische Beanspruchung reduziert sich die Lebensdauer des Elektromotors entsprechend. Dies ist vor allem deshalb ungünstig, weil bei einem Ausfall des Elektromotors die Kupplung in Offenstellung angeordnet ist, so dass das Kraftfahrzeug dann nicht mehr aus eigener Kraft fortbewegt werden kann. Die Lebensdauer des Elektromotors könnte zwar dadurch erhöht werden, dass dieser so groß dimensioniert wird, dass auch bei den in der Praxis nur sehr selten auftretenden ungünstigen Betriebszuständen nie thermisch überlastet wird. Ein solcher Elektromotor wäre jedoch relativ groß, entsprechend schwer und teuer.

Aus DE 198 06 497 C2 ist auch bereits ein gattungsfremder Antriebsstrang für ein Kraftfahrzeug bekannt, bei dem die Brennkraftmaschine über eine herkömmlich ausgebildete Reibungs-Schaltkupplung die Antriebsräder antreibt. Die Reibungs-Schaltkupplung ist mit Hilfe einer ein Kupplungspedal aufweisenden Betätigungsanordnung entgegen der Rückstellkraft einer Membranfeder aus der Schließstellung in die Offenstellung verstellbar. Durch Druck auf das Kupplungspedal kann der Fahrer des Kraftfahrzeugs die im Ruhezustand eingekuppelte Kupplung auskuppeln. Zum Detektieren der Schließstellung hat die Kupplung einen Kupplungsstellsensor. Ferner sind Schlupfsensoren zum Ermitteln eines Schlupfzustands der Kupplung vorgesehen. Der Kupplungsstellsensor und die Schlupfsensoren sind mit einer die Motorleistung der Brennkraftmaschine beeinflussenden Schlupfreglung verbunden, die auf die Ermittlung eines Schlupfzustands hin, ein vom Fahrer über ein Fahrpedal vorgegebenes Sollwertsignal für das Drehmoment der Brennkraftmaschine begrenzen. Nach Angabe der Patentschrift soll es dadurch möglich sein, die Reibungs-Schaltkupplung und sonstige Komponenten des Antriebsstrangs im Vergleich zu einer entsprechenden Kupplung ohne Schlupfregelung schwächer zu dimensionieren. Der Antriebsstrang hat jedoch den Nachteil, dass das das Drehmoment der Brennkraftmaschine erst begrenzt wird nachdem der Kupplungsschlupf bereits aufgetreten ist und die Kupplung das angeforderte Drehmoment nicht mehr übertragen kann.

Es besteht deshalb die Aufgabe, einen Antriebsstrang der eingangs genannten Art zu schaffen, der Kupplungs-Aktor kostengünstig mit kompakten Abmessungen herstellbar ist, bei dem der Elektromotor ab dennoch auch in ungünstigen Betriebszuständen zuverlässig vor thermischer Überlastung geschützt ist. Außerdem besteht die Aufgabe, ein Verfahren zum Betreiben eines Antriebsstrangs anzugeben, bei dem der Elektromotor vor thermischer Überlastung geschützt ist.

Diese Aufgabe wird bezüglich des Verfahrens dadurch gelöst, dass die thermische Belastung des Elektromotors ermittelt und ein der thermischen Belastung entsprechendes Belastungssignal erzeugt wird, dass das Belastungssignal mit einem einem zulässigen Belastungsbereich des Elektromotors zugeordneten Belastungsgrenzsignal verglichen wird, und dass bei einer Abweichung des Belastungssignal von dem Belastungsgrenzsignal das Drehmoment der Brennkraftmaschine begrenzt wird.

In vorteilhafter Weise wird also bei einer drohenden thermischen Überlastung des Elektromotors das Drehmoment der Brennkraftmaschine reduziert, so dass die von dem Elektromotor aufzubringende Kupplungs-Schließkraft und somit die Verlustleistung in dem Elektromotor abnimmt. Dadurch wird einer weiteren Erwärmung des Elektromotors entgegengewirkt. Die Reduzierung des Drehmoments der Brennkraftmaschine lässt sich bei entsprechender Dimensionierung des Kupplungs-Aktors derart durchführen, dass der Fahrer davon praktisch nichts merkt. Da die maximal zulässige thermische Belastung des Elektromotors außerdem nur relativ selten erreicht wird, wirkt sich die beim Erreichen der Belastungsgrenze durchzuführende Begrenzung oder Reduzierung des Drehmoments der Brennkraftmaschine nur unwesentlich auf den Fahrkomfort bzw. das Beschleunigungsveralten des Kraftfahrzeugs aus. Die Reduzierung des Drehmoments der Brennkraftmaschine kann unabhängig von einem eventuell vorhandenen Schlupfzustand der Kupplung erfolgen.

Bei einer vorteilhaften Ausgestaltung des Verfahrens wird die thermische Belastung des Elektromotors durch eine Temperaturmessung ermittelt. Dadurch kann der thermische Belastungszustand des Elektromotors relativ genau erfasst und somit die Betriebstemperatur des Elektromotors sicher auf einen maximal zulässigen Wert begrenzt werden.

Bei einer anderen vorteilhaften Ausgestaltung der Erfindung wird ein Messsignal für die elektrische Verlustleistung des Elektromotors erfasst, wobei das Belastungssignal aus diesem Messsignal, einem Schätzwert für einen Anfangszustand und Maschinenkenngrößen des Elektromotors ermittelt wird. Die Verlustleistung kann dabei aus Signalen berechnet werden, die in der Ansteuereinrichtung des Elektromotors sowieso vorhanden oder die bekannt sind, wie z.B. die Betriebsspannung des Elektromotors und/oder das Puls-Pausenverhältnis bei einem durch Pulsweitenmodulation angesteuerten Elektromotor. Der Schätzwert für einen Anfangszustand kann aus Erfahrungswerten ermittelt werden, wobei ggf. ein Sicherheitszuschlag berücksichtigt werden kann. So kann beispielsweise davon ausgegangen werden, dass die Betriebstemperatur des Elektromotors unter 50° C beträgt, wenn die Brennkraftmaschine längere Zeit abgeschaltet war. Gegebenenfalls ist es auch möglich, den Schätzwert unter Berücksichtigung mindestens eines Messwerts wenigstens eines Sensors einer anderen an dem Kraftfahrzeug verbauten Komponente, wie z.B. dem Temperaturmesssignal eines Außen-, Kühlwasser- und/oder Getriebeölthermometers zu ermitteln, um die Genauigkeit der Schätzung zu verbessern. Ausgehend von dem Schätzwert kann dann unter Berücksichtigung der Verlustleistung des Elektromotors und eines Wärmeflussmodells des Elektromotors und/oder dazu benachbarter Komponenten des Antriebsstrangs die Temperatur des Elektromotors ermittelt werden, beispielsweise mit Hilfe eines Mikrocomputers.

Vorteilhaft ist, wenn zum Begrenzen des Drehmoments der Brennkraftmaschine ein Schaltvorgang ausgelöst wird, bei dem das Schaltgetriebe in eine Schaltstufe mit größerem Übersetzungsverhältnis umgeschaltet wird. Dadurch nimmt die Drehzahl der Brennkraftmaschine zu, so dass sich bei gleich bleibender Leistung das Drehmoment der Brennkraftmaschine und somit auch die von dem Elektromotor aufzubringende Stellkraft entsprechend reduzieren. Das Auslösen eines Schaltvorgangs wird bevorzugt bei im unteren Drehzahlbereich der Brennkraftmaschine durchgeführt. Nachdem sich der Elektromotor abgekühlt hat, kann gegebenenfalls wieder in eine Schaltstufe mit kleinerem Übersetzungsverhältnis zurückgeschaltet werden.

Die vorstehend genannte Aufgabe wird bezüglich des Antriebsstrangs dadurch gelöst, dass für den Kupplungs-Aktor eine Einrichtung zur Bestimmung der thermischen Belastung des Elektromotors vorgesehen ist, die einen Ausgang für ein der Belastung des Elektromotors entsprechendes Belastungssignal und einen Ausgang für ein einem zulässigen Belastungsbereich zugeordneten Belastungsgrenzsignals aufweist, und dass diese Ausgänge derart über eine Verknüpfungseinrichtung mit dem Grenzwertsignaleingang des Motorsteuergeräts verbunden sind, dass das Drehmoment der Brennkraftmaschine begrenzt wird, wenn das Belastungssignal außerhalb des zulässigen Belastungsbereichs liegt.

Die Einrichtung zur Bestimmung der thermischen Belastung des Elektromotors übermittelt also an die Verknüpfungseinrichtung ein Belastungssignal, das in der Verknüpfungseinrichtung mit einem dem zulässigen Belastungsbereich des Elektromotors entsprechenden Belastungsgrenzsignal verglichen wird. In Abhängigkeit von dem Ergebnis des Vergleichs wird dann gegebenenfalls das Drehmoment der Brennkraftmaschine begrenzt und/oder reduziert, um eine thermische Überlastung des Elektromotors von vorne herein zu verhindern.

Bei einer vorteilhaften Ausführungsform der Erfindung ist zwischen der Kupplung und den Antriebsrädern ein Schaltgetriebe angeordnet, das mit Hilfe einer Betätigungseinrichtung bezüglich seiner Übersetzung verstellbar ist, wobei das Schaltgetriebe und/oder die Betätigungseinrichtung mit einem elektronischen Getriebesteuergerät verbunden ist, wobei das Getriebesteuergerät einen Grenzwertsignalausgang aufweist, an dem ein Grenzwertsignal zur Begrenzung des Drehmoments der Brennkraftmaschine während eines Schaltvorgangs ausgebbar ist, und wobei der Grenzwertsignalausgang derart über die Verknüpfungseinrichtung mit dem Grenzwertsignaleingang des Motorsteuergeräts verbunden ist, dass das Drehmoment der Brennkraftmaschine begrenzt wird, wenn das dem Grenzwertsignal entsprechende Drehmoment kleiner ist als das dem Drehmomentsollwertsignal entsprechende Drehmoment. Der Grenzwertsignaleingang des Motorsteuergeräts erfüllt dann eine Doppelfunktion, d.h. er wird sowohl zum Verbessern des Schaltkomforts des Schaltgetriebes als auch zum Schützen des Elektromotors des Kupplungs-Aktors vor thermischer Überlastung genutzt.

Bei einer zweckmäßigen Ausgestaltung der Erfindung weist die Einrichtung zur Bestimmung der thermischen Belastung des Elektromotors mindestens einen Temperatursensor auf. Der thermische Belastungszustand des Elektromotors kann dadurch mit großer Präzision erfasst und überwacht werden.

Vorteilhaft ist, wenn die die Einrichtung zur Bestimmung der thermischen Belastung des Elektromotors mindestens einen Eingang für ein Wicklungsstromsignal des Elektromotors aufweist, und wenn dieser Eingang mit einer Recheneinrichtung verbunden ist, die zur Berechnung eines Schätzwertes für die Temperatur des Elektromotors aus dem Wcklungsstromsignal, Kenngrößen des Kupplungs-Aktors und gegebenenfalls einer vorgegebenen Anfangstemperatur ausgebildet ist, die der Elektromotor zu Beginn der Bestromung seiner Wicklung aufweist. Dabei ist es sogar möglich, die thermische Belastung des Elektromotors ohne die Verwendung eines Sensors zu bestimmen, beispielsweise wenn der Wicklungsstrom bei einem pulsweitenmodulierten Elektromotor aus dem Puls-Pausenverhältnis und einer bekannten Betriebsspannung des Elektromotors berechnet wird.

Bei einer vorteilhaften Ausführungsform der Erfindung weist der Antriebsstrang zwei Kupplungen auf, die eine Doppelkupplung bilden, wobei die einzelnen Kupplungen unterschiedlichen Eingangswellen des Schaltgetriebes zugeordnet und wechselweise in Schließstellung bringbar sind, wobei für jede der Kupplungen jeweils ein Kupplungs-Aktor mit einem Elektromotor, einer Ansteuereinrichtung und einer Einrichtung zur Bestimmung der thermischen Belastung des Elektromotors vorgesehen ist, wobei diese Einrichtungen jeweils einen Statussignalausgang zur Übermittlung eines eine thermische Überlastung des betreffenden Elektromotors anzeigenden Statussignals an das Getriebesteuergerät aufweist, und wobei das Getriebesteuergerät derart ausgebildet ist, dass es bei Vorliegen eines eine thermische Überbelastung anzeigenden Statussignals einen Schaltvorgang auslöst, bei dem die Kupplung, für deren Elektromotor die thermische Überbelastung angezeigt wird, geöffnet und die jeweils andere Kupplung geschlossen wird. Bei einer drohenden thermischen Überlastung eines Elektromotors einer ersten Kupplung wird also - sofern dies zu einem zulässigen Betriebszustand insbesondere des Schaltgetriebes, der Brennkraftmaschine und der Elektromotoren führt - ein Schaltvorgang ausgelöst, bei dem auf den Elektromotor der zweiten Kupplung umgeschaltet wird. Dadurch wird der zuerst genannte Elektromotor thermisch entlastet und kann sich abkühlen.

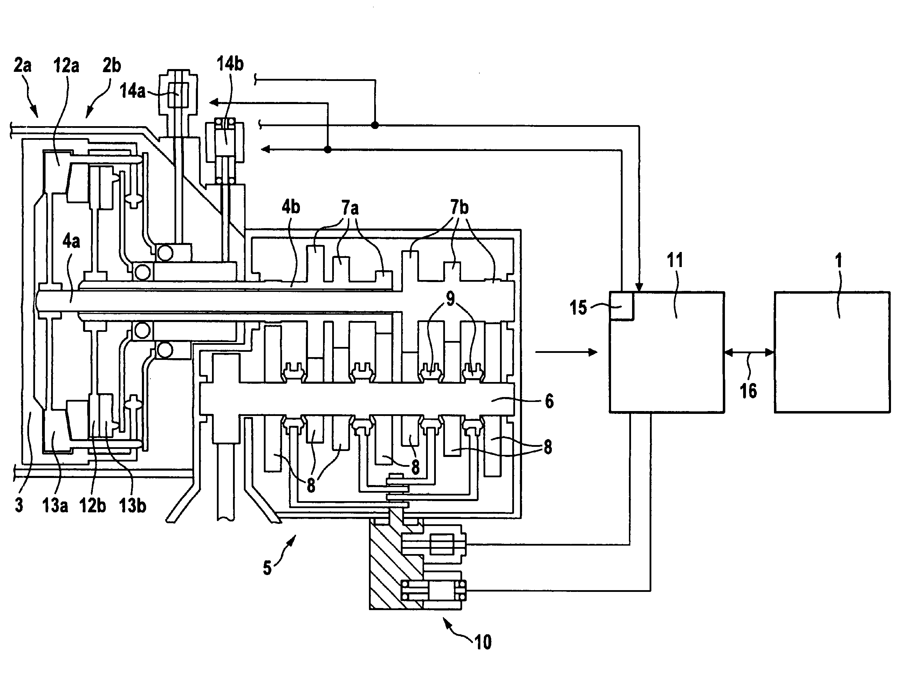

Nachfolgend ist ein Ausführungsbeispiel der Erfindung anhand der Zeichnung näher erläutert. Die einzige Figur zeigt eine schematische Darstellung eines Antriebsstrangs für ein Kraftfahrzeug.

Ein Antriebsstrang für ein Kraftfahrzeug weist eine in der Zeichnung nicht näher dargestellte, an sich bekannte Brennkraftmaschine auf, die mit einem elektronischen Motorsteuergerät 1 in Steuerverbindung steht. Das Motorsteuergerät hat einen Sollwertsignaleingang für ein Drehmoment-Sollwertsignal, das vom Fahrer beispielsweise über ein elektronisches Gaspedal, von einer automatischen Geschwindigkeitsregeleinrichtung oder von einer Fahrdynamikregelung vorgegeben wird. Mit Hilfe des Motorsteuergeräts wird das Drehmoment der Brennkraftmaschine in an sich bekannter Weise in Abhängigkeit von dem Drehmoment-Sollwertsignal eingestellt.

Der Antriebsstrang hat ferner eine Doppelkupplungseinrichtung mit zwei nicht selbsthemmende Kupplungen 2a, 2b, die an ihrer Eingangsseite mit einem Schwungrad 3 der Brennkraftmaschine und an ihrer Ausgangsseite jeweils mit einer von zwei koaxial zueinander angeordneten Eingangswellen 4a, 4b eines Parallel-Schaltgetriebes 5 drehfest verbunden sind. Eine Ausgangswelle 6 des Parallel-Schaltgetriebes 5 treibt in der Zeichnung nicht näher dargestellte Antriebsräder des Kraftfahrzeugs an.

Auf den beiden Eingangswellen 4a, 4b sind jeweils mehrere, in Axialrichtung der Eingangswellen 4a, 4b zueinander versetzte erste Getriebezahnräder 7a, 7b angeordnet, die drehfest mit der Eingangswellen 4a, 4b verbunden sind. Die ersten Getriebezahnräder 7a, 7b wirken jeweils mit einem dazu passenden zweiten Getriebezahnrad 8 zusammen, das auf der Ausgangswelle 6 jeweils radial zu dem ihm zugeordneten ersten Getriebezahnrad 7a, 7b angeordnet ist. Die zweiten Getriebezahnräder 8 sind zum Schalten unterschiedlicher Gänge mit Hilfe von Schaltelementen 9 drehfest mit der Ausgangswelle 6 verbindbar. Die Schaltelemente 9 sind zum Schalten der Gänge mit Hilfe einer Betätigungseinrichtung 10 verstellbar. Die Betätigungseinrichtung 10 weist Getriebe-Aktoren auf, die von einem Getriebesteuergerät 11 angesteuert werden.

Jede Kupplung 2a, 2b hat jeweils eine Kupplungsscheibe 12a, 12b mit einem Reibbelag, der zwischen einer der betreffenden Kupplungsscheibe 12a, 12b zugeordneten Anlagefläche des Schwungrads 3 und einer Druckscheibe 13a, 13b reibschlüssig einklemmbar ist. Die Druckscheibe 13a, 13b sind jeweils in Axialrichtung auf das Schwungrad 3 zu- und von diesem wegbewegbar ist.

Jeder Kupplung 2a, 2b ist jeweils ein Kupplungs-Aktor mit einem Elektromotor 14a, 14b als Verstellantrieb zugeordnet, mit dessen Hilfe die betreffende Kupplung 2a, 2b in eine Offen- und eine Schließstellung verstellbar ist. Zum Antreiben der Räder befindet sich - je nach dem, welcher Gang gerade eingelegt ist - jeweils eine der beiden Kupplungen 2a, 2b in Schließstellung, während die andere Kupplung 2b, 2a geöffnet ist. Um die Räder von der Brennkraftmaschine abzukoppeln, können auch beide Kupplungen 2a, 2b gleichzeitig geöffnet sein.

Die beiden Kupplungen 2a, 2b sind jeweils als selbst öffnende Kupplung 2a, 2b ausgebildet, die durch die Rückstellkraft einer Tellerfeder in Offenstellung positioniert und mit Hilfe der Elektromotoren 14a, 14b entgegen der Rückstellkraft in die Schließstellung verstellt werden können. Während der Schließdauer der Kupplung 2a, 2b wird der der Kupplung 2a, 2b zugeordnete Elektromotor 14a, 14b mit Hilfe einer in der Zeichnung nicht näher dargestellten Ansteuereinrichtung ständig bestromt.

Mittels der Ansteuereinrichtung wird die Stellkraft des der Ansteuereinrichtung zugeordneten Kupplungs-Aktors etwa proportional zum Drehmoment der Brennkraftmaschine eingestellt. Ein Eingang der Ansteuereinrichtung ist dazu mit einem Drehmomentsignal-Ausgang des Motorsteuergeräts 1 verbunden. Dadurch tritt bei einem niedrigen Drehmoment der Brennkraftmaschine eine entsprechend geringe Verlustleistung an dem jeweils bestromten Elektromotor 14a, 14b auf.

Die Ansteuereinrichtung weist für jeden Elektromotor 14a, 14b eine Einrichtung 15 zur Bestimmung der thermischen Belastung des Elektromotors 14a, 14b auf. Die Einrichtung 15 kann einen Temperatursensor und/oder einen Mikrocontroller aufweisen, in dem ein Betriebsprogramm abgelegt ist, das mit Hilfe eines Modells des Kupplungs-Aktors die Betriebstemperatur des Elektromotors 14a, 14b ermittelt und an einem ersten Ausgang ein Belastungssignal bereitstellt, das ein Maß für die thermische Belastung des Elektromotors 14a, 14b darstellt. An einem zweiten Ausgang stellt die Einrichtung 15 ein Belastungsgrenzsignal bereit, das einem zulässigen thermischen Belastungsbereich des Elektromotors 14a, 14b entspricht. Bei dem in der Zeichnung dargestellten Ausführungsbeispiel ist die Einrichtung 15 in das einen Mikrocomputer aufweisende Getriebesteuergerät 11 integriert. Die genannten Ausgänge sind über eine in das Getriebesteuergerät 11 integrierte, in der Zeichnung nicht näher dargestellte Verknüpfungseinrichtung und ein Bussystem 16, wie z.B. einem CAN Bus, mit einem Grenzwertsignaleingang des Motorsteuergeräts 1 verbunden. Die Verknüpfungseinrichtung und das Motorsteuergerät 1 sind derart ausgebildet, dass das Drehmoment der Brennkraftmaschine begrenzt oder reduziert wird, wenn das Belastungssignal außerhalb des zulässigen Belastungsbereichs liegt. Somit wird auch unter ungünstigen Betriebsbedingungen eine thermische Überlastung des Elektromotors vermieden.

Das Getriebesteuergerät 11 weist ferner einen Grenzwertsignalausgang auf, an dem ein Grenzwertsignal zur Begrenzung des Drehmoments der Brennkraftmaschine während eines Schaltvorgangs ausgegeben wird. Der Grenzwertsignalausgang ist derart über die Verknüpfungseinrichtung und das Bussystem 16 mit dem Grenzwertsignaleingang des Motorsteuergeräts verbunden, dass das Drehmoment der Brennkraftmaschine begrenzt wird, wenn das dem Grenzwertsignal entsprechende Drehmoment kleiner ist als das dem Drehmomentsollwertsignal entsprechende Drehmoment. Dadurch wird ein weitgehend ruckfreies Schalten der Gänge ermöglicht.

Erwähnt werden soll noch, dass die Erfindung nicht auf einen Kupplungs-Aktor bzw. auf eine Verwendung bei einem solchen beschränkt ist. Vielmehr kann die Erfindung auch bei anderen thermisch belasteten Aktoren verwendet werden, wie z.B. bei einem Aktor zum Positionieren eines Ventils für eine Hubkolbenmaschine.

### Bezugszeichenliste

- 1: Motorsteuergerät
- 2a: Kupplung
- 2b: Kupplung
- 3: Schwungrad
- 4a: Eingangswelle
- 4b: Eingangswelle
- 5: Parallel-Schaltgetriebe
- 6: Ausgangswelle
- 7a: erstes Getriebezahnrad
- 7b: erstes Getriebezahnrad
- 8: zweites Getriebezahnrad
- 9: Schaltelement
- 10: Betätigungseinrichtung
- 11: Getriebesteuergerät
- 12a: Kupplungsscheibe
- 12b: Kupplungsscheibe
- 13a: Druckscheibe
- 13b: Druckscheibe
- 14a: Elektromotor
- 14b: Elektromotor
- 15: Einrichtung zur Bestimmung der thermischen Belastung
- 16: Bussystem

## Patentansprüche

1. Verfahren zum Betreiben eines Antriebsstrangs für ein Kraftfahrzeug, wobei mittels einer Brennkraftmaschine in Abhängigkeit von einem bereitgestellten Drehmoment-Sollwertsignal ein Drehmoment erzeugt und über eine Kupplung (2a, 2b) auf Antriebsräder übertragen wird, wobei mit Hilfe eines Elektromotors (14a, 14b) eine Schließkraft aufgebracht wird, mit der die Kupplung (2a, 2b) entgegen einer Rückstellkraft in einer Schließstellung gehalten wird, und wobei der Elektromotor (14a, 14b) derart bestromt wird, dass bei einem hohen Drehmoment ein hoher Strom und bei einem niedrigeren Drehmoment ein kleinerer Strom zur Anwendung kommt, **dadurch gekennzeichnet, dass** die thermische Belastung des Elektromotors (14a, 14b) ermittelt und ein der thermischen Belastung entsprechendes Belastungssignal erzeugt wird, dass das Belastungssignal mit einem einem zulässigen Belastungsbereich des Elektromotors (14a, 14b) zugeordneten Belastungsgrenzsignal verglichen wird, und dass bei einer Abweichung des Belastungssignals von dem Belastungsgrenzsignal das Drehmoment der Brennkraftmaschine begrenzt wird.

2. Verfahren nach Anspruch 1, **dadurch gekennzeichnet, dass** die thermische Belastung des Elektromotors (14a, 14b) durch eine Temperaturmessung ermittelt wird.

3. Verfahren nach Anspruch 1 oder 2, **dadurch gekennzeichnet, dass** ein Messsignal für die elektrische Verlustleistung des Elektromotors (14a, 14b) erfasst wird und dass das Belastungssignal aus diesem Messsignal, einem Schätzwert für einen Anfangszustand und Maschinenkenngrößen des Elektromotors (14a, 14b) ermittelt wird.

4. Verfahren nach einem der Ansprüche 1 bis 3, **dadurch gekennzeichnet, dass** zum Begrenzen des Drehmoments der Brennkraftmaschine ein Schaltvorgang ausgelöst wird, bei dem das Schaltgetriebe (5) in eine Schaltstufe mit größerem Übersetzungsverhältnis umgeschaltet wird.

5. Antriebsstrang für ein Kraftfahrzeug, mit einer mit einem elektronischen Motorsteuergerät (1) verbundenen Brennkraftmaschine, die über eine Kupplung (2a, 2b) mit Antriebsrädern in Antriebsverbindung steht, wobei die Kupplung (2a, 2b) als selbst öffnende Kupplung (2a, 2b) ausgebildet ist, die mit Hilfe eines einen Elektromotor (14a, 14b) als Verstellantrieb aufweisenden Kupplungs-Aktors entgegen einer Rückstellkraft aus einer Offenstellung in eine Schließstellung bringbar ist, wobei der Kupplungs-Aktor eine Ansteuereinrichtung für den Elektromotor (14a, 14b) aufweist, die zum Einstellen der Stellkraft des Kupplungs-Aktors in Abhängigkeit vom Drehmoment der Brennkraftmaschine mit dem Motorsteuergerät (1) verbunden ist, wobei das Motorsteuergerät (1) einen Sollwertsignaleingang für ein Drehmoment-Sollwertsignal und einen Grenzwertsignaleingang für ein Drehmoment-Grenzwertsignal aufweist, und wobei das Motorsteuergerät (1) derart ausgestaltet ist, dass das Drehmoment der Brennkraftmaschine in Abhängigkeit von dem Drehmoment-Sollwertsignal eingestellt wird, wenn dieses innerhalb eines durch das Drehmoment-Grenzwertsignal vorgegebenen Drehmomentwertebereichs liegt, und dass das Drehmoment der Brennkraftmaschine auf den Drehmomentbereich begrenzt wird, wenn das dem Drehmoment-Sollwertsignal entsprechende Drehmoment außerhalb des Drehmomentwertebereichs liegt, **dadurch gekennzeichnet, dass** für den Kupplungs-Aktor eine Einrichtung (15) zur Bestimmung der thermischen Belastung des Elektromotors vorgesehen ist, die einen Ausgang für ein der Belastung des Elektromotors (14a, 14b) entsprechendes Belastungssignal und einen Ausgang für ein einem zulässigen Belastungsbereich zugeordneten Belastungsgrenzsignal aufweist, und dass diese Ausgänge derart über eine Verknüpfungseinrichtung mit dem Grenzwertsignaleingang des Motorsteuergeräts (1) verbunden sind, dass das Drehmoment der Brennkraftmaschine begrenzt wird, wenn das Belastungssignal außerhalb des zulässigen Belastungsbereichs liegt.

6. Antriebsstrang nach Anspruch 5, **dadurch gekennzeichnet, dass** zwischen der Kupplung (2a, 2b) und den Antriebsrädern ein Schaltgetriebe (5) angeordnet ist, das mit Hilfe einer Betätigungseinrichtung (10) bezüglich seiner Übersetzung verstellbar ist, dass das Schaltgetriebe (5) und/oder die Betätigungseinrichtung (10) mit einem elektronischen Getriebesteuergerät (11) verbunden ist, dass das Getriebesteuergerät (11) einen Grenzwertsignalausgang aufweist, an dem ein Grenzwertsignal zur Begrenzung des Drehmoments der Brennkraftmaschine während eines Schaltvorgangs ausgebbar ist, und dass der Grenzwertsignalausgang derart über die Verknüpfungseinrichtung mit dem Grenzwertsignaleingang des Motorsteuergeräts (1) verbunden ist, dass das Drehmoment der Brennkraftmaschine begrenzt wird, wenn das dem Grenzwertsignal entsprechende Drehmoment kleiner ist als das dem Drehmomentsollwertsignal entsprechende Drehmoment.

7. Antriebsstrang nach Anspruch 5 oder 6, **dadurch gekennzeichnet, dass** die Einrichtung (15) zur Bestimmung der thermischen Belastung des Elektromotors (14a, 14b) mindestens einen Temperatursensor aufweist.

8. Antriebsstrang nach Anspruch 5 oder 7, **dadurch gekennzeichnet, dass** die Einrichtung (15) zur Bestimmung der thermischen Belastung des Elektromotors (14a, 14b) mindestens einen Eingang für ein Wicklungsstromsignal des Elektromotors aufweist, und dass dieser Eingang mit einer Recheneinrichtung verbunden ist, die zur Berechnung eines Schätzwertes für die Temperatur des Elektromotors (14a, 14b) aus dem Wicklungsstromsignal, Kenngrößen des Kupplungs-Aktors und gegebenenfalls einer vorgegebenen Anfangstemperatur ausgebildet ist, die der Elektromotor (14a, 14b) zu Beginn der Bestromung seiner Wicklung aufweist.

9. Antriebsstrang nach einem der Ansprüche 5 bis 8, **dadurch gekennzeichnet, dass** er zwei Kupplungen (2a, 2b) aufweist, die eine Doppelkupplung bilden, dass die einzelnen Kupplungen (2a, 2b) unterschiedlichen Eingangswellen (4a, 4b) des Schaltgetriebes (5) zugeordnet und wechselweise in Schließstellung bringbar sind, dass für jede der Kupplungen (2a, 2b) jeweils ein Kupplungs-Aktor mit einem Elektromotor (14a, 14b), einer Ansteuereinrichtung und einer Einrichtung (15) zur Bestimmung der thermischen Belastung des Elektromotors (14a, 14b) vorgesehen ist, dass diese Einrichtungen (15) jeweils einen Statussignalausgang zur Übermittlung eines eine thermische Überlastung des betreffenden Elektromotors anzeigenden Statussignals an das Getriebesteuergerät (11) aufweist, und dass das Getriebesteuergerät (11) derart ausgebildet ist, dass es bei Vorliegen eines eine thermische Überbelastung anzeigenden Statussignals einen Schaltvorgang auslöst, bei dem die Kupplung (2a, 2b), für deren Elektromotor (14a, 14b) die thermische Überbelastung angezeigt wird, geöffnet und die jeweils andere Kupplung (2b, 2a) geschlossen wird.

## Claims

1. Method for operating a drive train for a motor vehicle, wherein a torque is generated by means of an internal combustion engine as a function of a torque set point value signal which is made available, and said torque is transmitted to driven wheels via a clutch (2a, 2b), wherein a closing force, with which the clutch (2a, 2b) is held in a closed position counter to a restoring force, is applied with the aid of an electric motor (14a, 14b), and wherein the electric motor (14a, 14b) is energized in such a way that at a high torque a high current is used and at a relatively low torque a relatively low current is used, **characterized in that** the thermal loading of the electric motor (14a, 14b) is determined and a load signal which corresponds to the thermal loading is generated, **in that** the load signal is compared with a load limiting signal which is assigned to a permissible load range of the electric motor (14a, 14b), and **in that** if the load signal deviates from the load limiting signal, the torque of the internal combustion engine is limited.

2. Method according to Claim 1, **characterized in that** the thermal loading of the electric motor (14a, 14b) is determined by a temperature measurement.

3. Method according to Claim 1 or 2, **characterized in that** a measurement signal for the electric power loss of the electric motor (14a, 14b) is acquired, and **in that** the load signal is determined from this measurement signal, an estimated value for an initial state and machine characteristic variables of the electric motor (14a, 14b).

4. Method according to one of Claims 1 to 3, **characterized in that** in order to limit the torque of the internal combustion engine a switching process is triggered during which the manual gearbox (5) is shifted into a shifting stage with a relatively large transmission ratio.

5. Drive train for a motor vehicle, having an internal combustion engine which is connected to an electronic engine control unit (1) and which has a drive connection to driven wheels via a clutch (2a, 2b), wherein the clutch (2a, 2b) is embodied as a self-opening clutch (2a, 2b) which can be moved from an open position into a closed position counter to a restoring force with the aid of a clutch actuator which has an electric motor (14a, 14b) as the adjustment drive, wherein the clutch actuator has an actuation device for the electric motor (14a, 14b), which actuation device is connected to the engine control unit (1) in order to set the actuating force of the clutch actuator as a function of the torque of the internal combustion engine, wherein the engine control unit (1) has a set point signal input for a torque set point value signal and a limiting value signal input for a torque limiting value signal, and wherein the engine control unit (1) is configured in such a way that the torque of the internal combustion engine is set as a function of the torque set point value signal if the latter is within a torque value range which is predefined by the torque limiting value signal, and in that the torque of the internal combustion engine is limited to the torque range if the torque which corresponds to the torque set point value signal is outside the torque value range, **characterized in that** a device (15) for determining the thermal load of the electric motor is provided for the clutch actuator, which device (15) has an output for a load signal which corresponds to the load of the electric motor (14a, 14b) and an output for a load limiting signal which is assigned to a permissible load range, and **in that** these outputs are connected to the limiting value signal input of the engine control unit (1) via a logic combination device in such a way that the torque of the internal combustion engine is limited if the load signal is outside the permissible load range.

6. Drive train according to Claim 5, **characterized in that** a manual gearbox (5), which can be adjusted with respect to its transmission ratio with the aid of an activation device (10), is arranged between the clutch (2a, 2b) and the driven wheels, **in that** the manual gearbox (5) and/or the activation device (10) are/is connected to an electronic gearbox control unit (11), **in that** the gearbox control unit (11) has a limiting value signal output to which a limiting value signal can be output during a switching process in order to limit the torque of the internal combustion engine, and **in that** the limiting value signal output is connected to the limiting value signal input of the engine control unit (1) via the logic combination device in such a way that the torque of the internal combustion engine is limited if the torque which corresponds to the limiting value signal is lower than the torque which corresponds to the torque set point value signal.

7. Drive train according to Claim 5 or 6, **characterized in that** the device (15) for determining the thermal load of the electric motor (14a, 14b) has at least a temperature sensor.

8. Drive train according to Claim 5 or 7, **characterized in that** the device (15) for determining the thermal load of the electric motor (14a, 14b) has at least one input for a winding current signal of the electric motor, and **in that** this input is connected to a computing device which is designed to calculate an estimated value for the temperature of the electric motor (14a, 14b) from the winding current signal, characteristic variables of the clutch actuator and, if appropriate, a predefined initial temperature which the electric motor (14a, 14b) has at the start of the energization of its winding.

9. Drive train according to one of Claims 5 to 8, **characterized in that** it has two clutches (2a, 2b) which form a double clutch, **in that** the individual clutches (2a, 2b) are assigned to different input shafts (4a, 4b) of the manual gearbox (5) and can be alternately placed in the closed position, **in that** for each of the clutches (2a, 2b) in each case one clutch actuator with an electric motor (14a, 14b), an actuation device and a device (15) for determining the thermal load of the electric motor (14a, 14b) is provided, **in that** these devices (15) each have a status signal output for transmitting a status signal, displaying a thermal overload of the respective electric motor, to the gearbox control unit (11), and **in that** the gearbox control unit (11) is embodied in such a way that if a status signal which indicates a thermal overload is present said gearbox control unit (11) triggers a switching process during which the clutch (2a, 2b) for whose electric motor (14a, 14b) the thermal overload is indicated is opened, and the respective other clutch (2b, 2a) is closed.

## Revendications

1. Procédé de gestion du train d'entraînement d'un véhicule automobile,
dans lequel un couple de rotation est produit au moyen d'un moteur à combustion interne en fonction d'un signal préparé de valeur de consigne du couple de rotation et est transmis aux roues motrices par un embrayage (2a, 2b),
dans lequel une force de fermeture par laquelle l'embrayage (2a, 2b) est maintenu dans une position fermée en opposition à une force de rappel est appliquée au moyen d'un moteur électrique (14a, 14b) et
dans lequel le moteur électrique (14a, 14b) est alimenté en courant de telle sorte qu'il utilise un courant élevé lorsque le couple de rotation est élevé et un courant plus bas lorsque le couple de rotation est plus bas,
**caractérisé en ce que**
la charge thermique du moteur électrique (14a, 14b) est déterminée et un signal de charge qui correspond à la charge thermique est produit,
**en ce que** le signal de charge est comparé à un signal de limite de charge associé à une plage de charges admissibles du moteur électrique (14a, 14b) et
**en ce que** le couple de rotation du moteur à combustion interne est limité en cas de différence entre le signal de charge et le signal de limite de charge.

2. Procédé selon la revendication 1, **caractérisé en ce que** la charge thermique du moteur électrique (14a, 14b) est déterminée par une mesure de température.

3. Procédé selon les revendications 1 ou 2, **caractérisé en ce qu'**un signal de mesure de la puissance de perte électrique du moteur électrique (14a, 14b) est saisi et **en ce que** le signal de charge est déterminé à partir de ce signal de mesure, d'une valeur estimée d'un état initial et de grandeurs caractéristiques du moteur électrique (14a, 14b).

4. Procédé selon l'une des revendications 1 à 3, **caractérisé en ce qu'**une opération de changement de rapport de transmission dans laquelle la boîte de vitesse (5) est commutée sur un étage dont le rapport de transmission est plus élevé est déclenchée pour limiter le couple de rotation du moteur à combustion interne.

5. Train d'entraînement pour véhicule automobile,
qui présente un moteur à combustion interne relié à un appareil électronique (1) de commande du moteur qui est relié à entraînement aux roues motrices par un embrayage (2a, 2b), l'embrayage (2a, 2b) étant configuré comme embrayage (2a, 2b) à auto-ouverture qui peut être amené d'une position ouverte à une position fermée en opposition à une force de rappel au moyen d'un actionneur d'embrayage qui présente un moteur électrique (14a, 14b) comme entraînement de réglage,
l'actionneur d'embrayage présentant un dispositif de commande du moteur électrique (14a, 14b) qui est relié à l'appareil (1) de commande du moteur pour régler la force d'ajustement de l'actionneur d'embrayage en fonction du couple de rotation du moteur à combustion interne,
l'appareil (1) de commande du moteur présentant une entrée de signal de valeur de consigne du couple de rotation et une entrée de signal de valeur limite du couple de rotation,
l'appareil (1) de commande du moteur étant configuré de telle sorte que le couple de rotation du moteur à combustion interne est réglé par le signal de valeur limite du couple de rotation en fonction du signal de valeur de consigne du couple de rotation lorsque ce signal est situé à l'intérieur d'une plage prédéterminée de valeurs de couple de rotation,
le couple de rotation du moteur à combustion interne étant limité à la plage de couples de rotation lorsque le couple de rotation qui correspond au signal de valeur de consigne du couple de rotation est situé à l'extérieur de la plage de valeurs de couple de rotation,
**caractérisé en ce que**
un dispositif (15) de détermination de la charge thermique du moteur électrique prévu pour l'actionneur de l'embrayage présente une sortie pour un signal de charge qui correspond à la charge du moteur électrique (14a, 14b) et une sortie pour un signal de limite de charge associé à une plage de charges admissibles et
**en ce que** ces sorties sont reliées par un dispositif d'association à l'entrée de signal de valeur limite de l'appareil (1) de commande du moteur lorsque le signal de charge est situé à l'extérieur de la plage de charges admissibles.

6. Train d'entraînement selon la revendication 5, **caractérisé en ce qu'**une boîte de transmission (5) dont le rapport de transmission peut être ajusté au moyen d'un dispositif d'actionnement (10) est disposée entre l'embrayage (2a, 2b) et les roues motrices,
**en ce que** la boîte de transmission (5) et/ou le dispositif d'actionnement (10) sont reliés à un appareil électronique (11) de commande de transmission,
**en ce que** l'appareil (11) de commande de transmission présente une sortie de signal de valeur limite par laquelle un signal de valeur limite qui limite le couple de rotation du moteur à combustion interne pendant une opération de changement de rapport peut être émis,
**en ce que** la sortie de signal de valeur limite est reliée par le dispositif d'association à l'entrée de signal de valeur limite de l'appareil (1) de commande du moteur de telle sorte que le couple de rotation du moteur à combustion interne soit limité lorsque le couple de rotation qui correspond au signal de valeur limite est inférieur au couple de rotation qui correspond au signal de valeur de consigne du couple de rotation.

7. Train d'entraînement selon les revendications 5 ou 6, **caractérisé en ce que** le dispositif (15) de détermination de la charge thermique du moteur électrique (14a, 14b) présente au moins une sonde de température.

8. Train d'entraînement selon les revendications 5 ou 7, **caractérisé en ce que** le dispositif (15) de détermination de la charge thermique du moteur électrique (14a, 14b) présente au moins une entrée pour un signal de courant d'enroulement du moteur électrique et
**en ce que** cette entrée est reliée à un dispositif de calcul qui est configuré pour calculer une valeur estimée de la température du moteur électrique (14a, 14b) à partir du signal de courant d'enroulement, de grandeurs caractéristiques de l'actionneur d'embrayage et éventuellement d'une température initiale prédéterminée que le moteur électrique (14a, 14b) présente au début de l'alimentation en courant de son enroulement.

9. Train d'entraînement selon l'une des revendications 5 à 8, **caractérisé en ce qu'**il présente deux embrayages (2a, 2b) qui forment un embrayage double, **en ce que** les différents embrayages (2a, 2b) sont associés à des arbres d'entrée différents (4a, 4b) de la boîte de transmission (5) et peuvent être amenés en alternance en position fermée,
**en ce qu'**un actionneur d'embrayage qui présente un moteur électrique (14a, 14b), un dispositif de commande et un dispositif (15) de détermination de la charge thermique du moteur électrique (14a, 14b) est prévu pour chacun des embrayages (2a, 2b),
**en ce que** chacun de ces dispositifs (15) présente une sortie de signal d'état qui permet de transmettre à l'appareil (11) de commande de transmission un signal d'état qui indique une surcharge thermique du moteur électrique concerné et
**en ce que** l'appareil (11) de commande de transmission est configuré de telle sorte que lorsque le signal d'état indique une surcharge thermique, il déclenche une opération de changement de rapport de transmission qui ouvre l'embrayage (2a, 2b) pour lequel une surcharge thermique du moteur électrique (14a, 14b) est indiquée, l'autre embrayage (2a, 2b) étant fermé.
